# EUROPÄISCHE PATENTSCHRIFT

(11) **EP 1 456 563 B1**
(45) Veröffentlichungstag und Bekanntmachung des Hinweises auf die Patenterteilung: **25.05.2005**
(21) Anmeldenummer: 02805329.6
(22) Anmeldetag: 17.12.2002
(51) Int. Cl.: F16H 3/66

(54) **MEHRSTUFENGETRIEBE**
MULTISTEP REDUCTION GEAR
ENGRENAGE A PLUSIEURS ETAGES

(30) Priorität: 20.12.2001 DE 10162885
(43) Veröffentlichungstag der Anmeldung: 15.09.2004
(73) Patentinhaber: ZF FRIEDRICHSHAFEN AG, 88038 Friedrichshafen (DE)
(72) Erfinder: GUMPOLTSBERGER, Gerhard, 88045 Friedrichshafen (DE)
(86) Internationale Anmeldenummer: PCT/EP2002/014356
(87) Internationale Veröffentlichungsnummer: WO 2003/054420

(56) Entgegenhaltungen:
- EP-A- 0 434 525
- DE-A- 19 949 507
- GB-A- 1 308 006

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anlaufelement wie etwa einem hydrodynamischen Drehmomentwandler oder einer Strömungskupplung verbunden sind.

Ein gattungsgemäßes Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmen.

Des weiteren ist aus der DE 199 495 07 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Außerdem wird im Rahmen der EP 0 434 525 A1 ein Mehrstufengetriebe offenbart, welches eine Antriebswelle und eine Abtriebswelle, die in einem Gehäuse angeordnet sind, einen mit der Abtriebswelle konzentrischen Planetensatz aus vier von einem ersten bis zu einem vierten in Drehzahlordnung bezeichneten Elementen, d. h. einem sogenannten doppelten Planetensatz sowie fünf Schaltelemente, nämlich drei Kupplungen und zwei Bremsen enthält, deren selektives paarweises Eingreifen verschiedene Übersetzungsverhältnisse zwischen Antriebswelle und der Abtriebswelle bestimmt, wobei das Getriebe zwei Leistungswege aufweist, so dass durch das selektive paarweise Eingreifen der fünf Schaltelemente sechs Vorwärtsgänge erzielt werden.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird.

Diese Aufgabe wird erfindungsgemäß durch die Merkmale des Patentanspruches 1 gelöst. Vorteile und weitere vorteilhafte Ausgestaltungen gehen aus den Unteransprüchen hervor.

Demnach umfasst das erfindungsgemäße Mehrstufengetriebe in Planetenbauweise eine Antriebswelle und eine Abtriebswelle, welche in einem Gehäuse angeordnet sind, mindestens drei Einsteg-Planetensätze, wobei der erste Einsteg-Planetensatz eine feste Eingangsübersetzung für den zweiten Planetensatz definiert, mindestens sechs drehbare Wellen sowie mindestens fünf Schaltelemente, vorzugsweise zwei Bremsen und drei Kupplungen, deren selektives paarweises Eingreifen verschiedene Übersetzungsverhältnisse zwischen der Antriebswelle und der Abtriebswelle bewirkt, sodass vorzugsweise sechs Vorwärtsgänge und ein Rückwärtsgang realisierbar sind.

Hierbei ist die Antriebswelle direkt mit dem Sonnenrad des ersten Planetensatzes und der Steg des ersten Planetensatzes ständig direkt mit dem Gehäuse verbunden. Des weiteren ist die Abtriebswelle mit dem Hohlrad des zweiten Planetensatzes und dem Steg des dritten Planetensatzes verbunden, wobei eine weitere Welle ständig mit dem Steg des zweiten Planetensatzes und dem Hohlrad des dritten Planetensatzes verbunden ist, und eine weitere Welle ständig mit dem Sonnenrad des zweiten Planetensatzes verbunden ist. Ferner ist erfindungsgemäß eine weitere Welle ständig mit dem Hohlrad des ersten Planetensatzes verbunden; eine weitere Welle ist ständig mit dem Sonnenrad des dritten Planetensatzes verbunden. Hierbei sind die Planetensätze mittels Schaltelementen und/oder Wellen gekoppelt.

Durch die erfindungsgemäße Konstruktion ergeben sich geeignete Übersetzungen sowie eine erhebliche Erhöhung der Gesamtspreizung des Mehrstufengetriebes, was in erhöhtem Fahrkomfort und signifikanter Verbrauchsabsenkung resultiert.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, nämlich vorzugsweise durch nur drei Kupplungen und zwei Bremsen, der Bauaufwand erheblich reduziert.

In vorteilhafter Weise ist es mit dem erfindungsgemäßen Mehrstufengetriebe möglich, ein Anfahren mit einem hydrodynamischen Wandler, einer externen Anfahrkupplung oder auch einem sonstige geeigneten externen Anfahrelement durchzuführen. Es ist auch denkbar, einen Anfahrvorgang mit einem im Getriebe integrierten Anfahrelement zu ermöglichen. Darüber hinaus ergibt sich bei dem erfindungsgemäßen Mehrstufengetriebe ein guter Wirkungsgrad hinsichtlich der Schlepp- und Verzahnungsverluste.

Des weiteren liegen geringe Momente in den Schaltelementen und auch in den Planetensätzen vor. Dadurch wird der Verschleiß des Mehrstufengetriebes in besonders vorteilhafter Weise reduziert. Aufgrund der geringen Momente in den Schaltelementen und den Planetensätzen kann das Getriebe kleiner dimensioniert werden, was zu einer Bauraumoptimierung und zu einer Reduzierung der Kosten führt.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnungen weiter erläutert.
In diesen stellen dar:
- Fig. 1: eine schematische Ansicht eines Ausführungsbeispiels eines erfindungsgemäßen Mehrstufengetriebes;
- Fig. 2: ein Schaltschema für das erfindungsgemäße Mehrstufengetriebe gemäß Fig. 1 und
- Fig. 3: eine schematische Ansicht eines zweiten Ausführungsbeispiels des erfindungsgemäßen Mehrstufengetriebes.

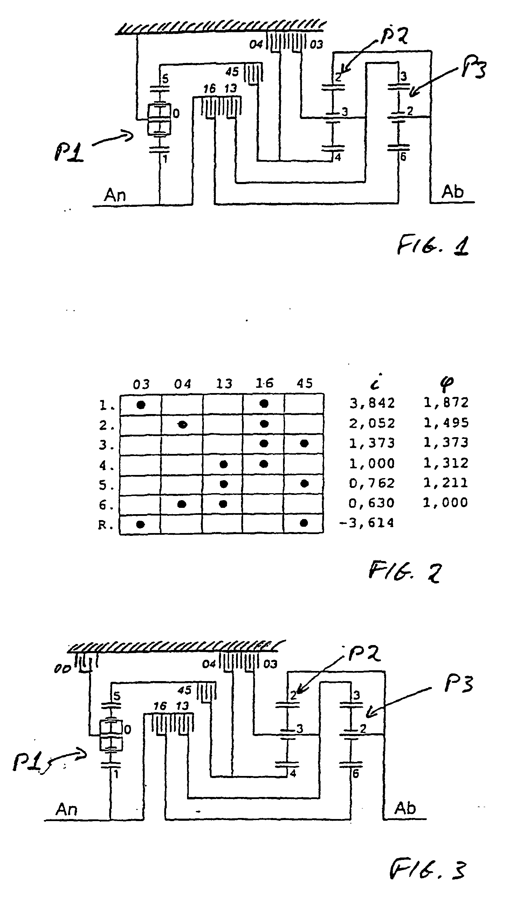

Gemäß Fig. 1 weist das erfindungsgemäße Mehrstufengetriebe in Planetenbauweise eine Antriebswelle 1 (An) und eine Abtriebswelle 2 (Ab) auf, welche in einem Gehäuse angeordnet sind, sowie drei Einsteg-Planetensätze P1, P2 und P3, wobei der erste Einsteg-Planetensatz P1 eine feste Eingangsübersetzung für den zweiten Planetensatz P2 definiert und vorzugsweise als Plus-Planetensatz ausgebildet ist. Die Planetensätze P2 und P3 sind vorzugsweise als Minus-Planetensätze ausgebildet. Des weiteren sind sechs drehbare Wellen 1, 2, 3, 4, 5 und 6 sowie fünf Schaltelemente, nämlich zwei Bremsen 03, 04 und drei Kupplungen 13, 16, 45 vorgesehen, deren selektives paarweises Eingreifen verschiedene Übersetzungsverhältnisse zwischen der Antriebswelle und der Abtriebswelle bewirkt, sodass sechs Vorwärtsgänge und ein Rückwärtsgang realisierbar sind.

Wie aus der Fig. 1 ersichtlich, ist die Antriebswelle 1 direkt mit dem Sonnenrad des ersten Planetensatzes P1 verbunden, und der Steg des ersten Planetensatzes P1 ist ständig direkt mit dem Gehäuse verbunden (Welle 0). Die Abtriebswelle ist mit dem Hohlrad des zweiten Planetensatzes P2 und dem Steg des dritten Planetensatzes P3 und die Welle 3 ständig mit dem Steg des zweiten Planetensatzes P2 und dem Hohlrad des dritten Planetensatzes P3 verbunden. Ferner ist die Welle 4 ständig mit dem Sonnenrad des zweiten Planetensatzes P2 verbunden, wobei die Welle 5 ständig mit dem Hohlrad des ersten Planetensatzes P1 verbunden ist und die Welle 6 ständig mit dem Sonnenrad des dritten Planetensatzes P3 verbunden ist.

Erfindungsgemäß sind die Wellen 3 und 4 durch die Bremsen 03 bzw. 04 an das Gehäuse ankoppelbar; die Kupplung 13 verbindet die Wellen 1 und 3 lösbar und die Kupplung 16 die Wellen 1 und 6 lösbar, wobei die Kupplung 45 die Wellen 4 und 5 lösbar verbindet.

Das entsprechende Schaltschema des oben diskutierten Ausführungsbeispiels ist Gegenstand der Fig. 2, in der auch beispielhafte Übersetzungen i sowie die sich ergebenden Stufensprünge ϕ angegeben sind.

Demnach weist das erfindungsgemäße Mehrstufengetriebe eine progressive Gangabstufung auf. Zudem werden bei sequentieller Schaltweise Doppelschaltungen vermieden, da zwei benachbarte Gangstufen jeweils ein Schaltelement gemeinsam benutzen. Des weiteren wird bei jeder beliebigen Schaltung zwischen dem ersten und dem vierten Gang und zwischen dem vierten und dem sechsten Gang jeweils nur ein Schaltelement betätigt. Für die Gänge 1 bis 4 ist die Kupplung 16 ständig aktiviert, diese Gänge ergeben sich durch die zusätzliche Aktivierung der Bremse 03 (erster Gang), der Bremse 04 (zweiter Gang), der Kupplung 45 (dritter Gang), der Kupplung 13 (vierter Gang). Für die Gänge 4 bis 6 bleibt die Kupplung 13 geschlossen und die Gänge ergeben sich durch zusätzliche Aktivierung der Kupplung 45 (fünfter Gang) und der Bremse 04 (sechster Gang). Erfindungsgemäß erfordert die Schaltung des Rückwärtsganges die Aktivierung der Bremse 03 und der Kupplung 45.

Die feste Verbindung des Steges des ersten Planetensatzes P1 mit dem Gehäuse kann durch eine lösbare Verbindung z.B. mittels einer Bremse ersetzt werden. Dies ist beispielhaft in Fig. 3 gezeigt, welche der Ausführungsform gemäß Fig. 1 entspricht, mit dem Unterschied, dass die Verbindung des Steges des ersten Planetensatzes P1 mit dem Gehäuse mittels einer Bremse 00 lösbar ausgebildet ist.

Dadurch kann auf die mittels der Bremse 00 gelöste Welle 0 eine E-Maschine oder eine andere geeignete zusätzliche Antriebsquelle angeordnet werden.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um eine Welle zu trennen bzw. zu verbinden.

Zudem ist es durch die erfindungsgemäße Bauweise möglich, Antrieb und Abtrieb sowohl auf der gleichen Seite des Getriebes bzw. des Gehäuses als auch entgegengesetzt anzuordnen. Auf der Antriebs- oder Abtriebsseite des Gehäuses kann zudem ein Achsdifferential oder ein Verteilerdifferential angeordnet werden.

Im Rahmen einer vorteilhaften Weiterbildung kann die Antriebswelle durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind.

Es ist auch möglich, ein derartiges Anfahrelement hinter dem Getriebe anzuordnen, wobei in diesem Fall die Antriebswelle fest mit der Kurbelwelle des Motors verbunden ist. Das Anfahren kann gemäß der Erfindung auch mittels eines Schaltelementes des Getriebes erfolgen, vorzugsweise mittels der Bremse 04, der Bremse 03 oder der Kupplung 16.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, vorzugsweise auf der Antriebswelle oder der Abtriebswelle, eine verschleißfreie Bremse angeordnet sein, was insbesondere für den Einsatz in Nutzkraftfahrzeugen von besonderer Bedeutung ist. Auch kann zum Antrieb von zusätzlichen Aggregaten auf jeder Welle ein Nebenabtrieb vorgesehen sein.

Die eingesetzten Schaltelemente können als lastschaltende Kupplungen oder Bremsen ausgebildet sein; Lamellenkupplungen, Bandbremsen und/oder Konuskupplungen sind aber ebenfalls einsetzbar. Des weiteren können auch formschlüssige Bremsen und/oder Kupplungen, wie z.B. Synchronisierungen oder Klauenkupplungen eingesetzt werden.

Ein weiterer vorteil des hier vorgestellten Mehrstufengetriebes besteht darin, dass auf jeder Welle als Generator und/oder als zusätzliche Antriebsmaschine eine elektrische Maschine anbringbar ist.

### Bezugszeichen

- 0: Welle
- 1: Welle
- 2: Welle
- 3: Welle
- 4: Welle
- 5: Welle
- 6: Welle
- 00: Bremse
- 03: Bremse
- 04: Bremse
- 13: Kupplung
- 16: Kupplung
- 45: Kupplung

- P1: Planetensatz
- P2: Planetensatz
- P3: Planetensatz
- An: Antrieb
- Ab: Abtrieb
- i: Übersetzung
- ϕ: Stufensprung

## Patentansprüche

1. Mehrstufengetriebe in Planetenbauweise, insbesondere Automatgetriebe für ein Kraftfahrzeug, umfassend:eine Antriebswelle (1) und eine Abtriebswelle (2), welche in einem Gehäuse angeordnet sind; drei Einsteg-Planetensätze (P1, P2, P3), wobei der erste Einsteg-Planetensatz (P1) eine feste Eingangsübersetzung für den zweiten Planetensatz (P2) definiert; mindestens sechs drehbare Wellen (0, 1, 2, 3, 4, 5, 6) sowie mindestens fünf Schaltelemente (00, 03, 04, 13, 16, 45), die Bremsen und/oder Kupplungen umfassen, deren selektives paarweises Eingreifen verschiedene Übersetzungsverhältnisse zwischen der Antriebswelle (1) und der Abtriebswelle (2) bewirkt, sodass sechs Vorwärtsgänge und ein Rückwärtsgang realisierbar sind; wobei, der Steg des ersten Planetensatzes (P1) drehfest mit dem Gehäuse verbindbar ist, der Abtrieb über die Abtriebswelle (2) erfolgt, welche mit dem Steg des dritten Planetensatzes (P3) verbunden ist, eine Welle (4) ständig mit dem Sonnenrad des zweiten Planetensatzes (P2) verbunden ist, die Welle (4) durch eine Bremse (04) an das Gehäuse ankoppelbar ist, und eine Kupplung (16) die Wellen (1) und (6) lösbar verbindet **dadurch gekennzeichnet, dass** die Antriebswelle (1) direkt mit dem Sonnenrad des ersten Planetensatzes (P1) verbunden ist, daß die Abtriebswelle (2) auch mit dem Hohlrad des zweiten Planetensatzes (P2) verbunden ist, dass eine Welle (3) ständig mit dem Steg des zweiten Planetensatzes (P2) und dem Hohlrad des dritten Planetensatzes (P3) verbunden ist, dass eine Welle (5) ständig mit dem Hohlrad des ersten Planetensatzes (P1) verbunden ist, und dass eine Welle (6) ständig mit dem Sonnenrad des dritten Planetensatzes (P3) verbunden ist, wobei die Welle (3) durch eine Bremse (03) an das Gehäuse ankoppelbar ist, eine Kupplung (13) die Wellen (1) und (3) lösbar verbindet, und wobei eine Kupplung (45) die Wellen (4) und (5) lösbar verbindet.

2. Mehrstufengetriebe nach Anspruch 1, **dadurch gekennzeichnet, dass** der erste Planetensatz (P1) als Plus-Planetensatz ausgebildet ist und dass die Planetensätze (P2) und (P3) als Minus-Planetensätze ausgebildet sind.

3. Mehrstufengetriebe nach Anspruch 1 oder 2, **dadurch gekennzeichnet, dass** die feste Verbindung des Steges des ersten Planetensatzes (P1) mit dem Gehäuse durch eine lösbare Verbindung mittels einer Bremse (00) ersetzbar ist.

4. Mehrstufengetriebe nach Anspruch 3, **dadurch gekennzeichnet, dass** auf der vom Gehäuse gelösten Welle (0) eine E-Maschine oder eine weitere geeignete zusätzliche Antriebsmaschine anordbar ist.

5. Mehrstufengetriebe nach einem der vorangehenden Ansprüche, **dadurch gekennzeichnet, dass** an jeder geeigneten Stelle des Getriebes Freiläufe einsetzbar sind.

6. Mehrstufengetriebe nach Anspruch 5, **dadurch gekennzeichnet, dass** die Freiläufe zwischen den Wellen und dem Gehäuse einsetzbar sind.

7. Mehrstufengetriebe nach einem der vorstehenden Ansprüche, **dadurch gekennzeichnet, dass** Antrieb und Abtrieb auf der gleichen Seite des Gehäuses anordbar sind.

8. Mehrstufengetriebe nach einem der vorstehenden Ansprüche, **dadurch gekennzeichnet, dass** Antrieb und Abtrieb auf entgegengesetzten Seiten des Gehäuses anordbar sind.

9. Mehrstufengetriebe nach einem der vorstehenden Ansprüche, **dadurch gekennzeichnet, dass** auf der Antriebs- oder auf der Abtriebsseite des Gehäuses ein Achs- oder ein Verteilerdifferential anordbar ist.

10. Mehrstufengetriebe nach einem der vorstehenden Ansprüche, **dadurch gekennzeichnet, dass** die Antriebswelle (1) durch ein Kupplungselement von einem Antriebsmotor trennbar ist.

11. Mehrstufengetriebe nach Anspruch 10, **dadurch gekennzeichnet, dass** als Kupplungselement ein hydrodynamischer Wandler, eine hydraulische Kupplung, eine Trockenanfahrkupplung, eine nasse Anfahrkupplung, eine Magnetpulverkupplung oder eine Fliehkraftkupplung vorgesehen ist.

12. Mehrstufengetriebe nach einem der vorstehenden Ansprüche, **dadurch gekennzeichnet, dass** hinter dem Getriebe ein externes Anfahrelement, insbesondere nach Anspruch 11 anordbar ist, wobei die Antriebswelle (1) fest mit der Kurbelwelle des Antriebsmotors verbunden ist.

13. Mehrstufengetriebe nach einem der vorstehenden Ansprüche, **dadurch gekennzeichnet, dass** das Anfahren mittels eines Schaltelementes des Getriebes erfolgt, wobei die Kurbelwelle des Motors ständig mit der Antriebswelle (1) verbunden ist.

14. Mehrstufengetriebe nach Anspruch 13, **dadurch gekennzeichnet, dass** als Schaltelement die Bremse (04), die Bremse (03) oder die Kupplung (16) einsetzbar sind.

15. Mehrstufengetriebe nach einem der vorstehenden Ansprüche, **dadurch gekennzeichnet, dass** zwischen Motor und Getriebe ein Torsionsschwingungsdämpfer anordbar ist.

16. Mehrstufengetriebe nach einem der vorstehenden Ansprüche, **dadurch gekennzeichnet, dass** auf jeder Welle eine verschleißfreie Bremse anordbar ist.

17. Mehrstufengetriebe nach Anspruch 16, **dadurch gekennzeichnet, dass** eine verschleißfreie Bremse auf der Antriebswelle (1) oder der Abtriebswelle (2) anordbar ist.

18. Mehrstufengetriebe nach einem der vorstehenden Ansprüche, **dadurch gekennzeichnet, dass** zum Antrieb von zusätzlichen Aggregaten auf jeder Welle ein Nebenabtrieb anordbar ist.

19. Mehrstufengetriebe nach Anspruch 18, **dadurch gekennzeichnet, dass** der Nebenabtrieb auf der Antriebswelle (1) oder der Abtriebswelle (2) anordbar ist.

20. Mehrstufengetriebe nach einem der vorstehenden Ansprüche, **dadurch gekennzeichnet, dass** die Schaltelemente als lastschaltende Kupplungen oder Bremsen ausgebildet sind.

21. Mehrstufengetriebe nach Anspruch 20, **dadurch gekennzeichnet, dass** Lamellenkupplungen, Bandbremsen und/oder Konuskupplungen einsetzbar sind.

22. Mehrstufengetriebe nach einem der vorstehenden Ansprüche, **dadurch gekennzeichnet, dass** als Schaltelemente formschlüssige Bremsen und/oder Kupplungen vorgesehen sind.

23. Mehrstufengetriebe nach einem der vorstehenden Ansprüche, **dadurch gekennzeichnet, dass** auf jeder Welle als Generator und/oder als zusätzliche Antriebsmaschine eine elektrische Maschine anbringbar ist.

## Claims

1. Multiple-stage transmission with planetary design, especially automatic transmissions for a motor vehicle, including:Input shaft (1) and output shaft (2), arranged in one housing; three single-web planetary sets (P1, P2, P3), with the first single-web planetary set (P1) defining a fixed input ratio for the second planetary set (P2);at least six rotating shafts (0, 1, 2, 3, 4, 5, 6) as well as at least five shift elements (00, 03, 04, 13, 16, 45), including the brakes and/or clutches, which, in pairs, selectively control different transmission ratios between the input shaft (1) and the output shaft (2), making six forward gears and one reverse gear possible; with the web of the first planetary set (P1) is non-rotationally linked to the housing, the output takes place via the output shaft (2), which is connected to the web of the third planetary set (P3), one shaft (4) is always connected to the sun gear of the second planetary set (P2), where it is possible to connect the shaft (4) to the housing by a brake (04), with a clutch (16) detachably connecting the shafts (1) and (6) **characterized in that** the input shaft (1) is directly connected to the sun gear of the first planetary set (P1), that the output shaft (2) is also connected to the ring gear of the second planetary set (P2), that one shaft (3) is always connected to the web of the second planetary set (P2) and the ring gear of the third planetary set (P3), that one shaft (5) is always connected to the ring gear of the first planetary set (P1), and that one shaft (6) is always connected to the sun gear of the third planetary set (P3), where it is possible to connect the shaft (3) to the housing by a brake (03), a clutch (13) detachably connects the shafts (1) and (3), and a clutch (45) detachably connecting the shafts (4) and (5).

2. Multiple-stage transmission in accordance with claim 1, **characterized in that** the first planetary set (P1) is formed as a plus planetary set and the planetary gears (P2) and (P3) are formed as minus planetary sets.

3. Multiple-stage transmission in accordance with claim 1 or 2, **characterized** in that the fixed connection of the first planetary set (P1) web with the housing can be replaced by a detachable connection via a brake (00).

4. Multiple stage transmission in accordance with claim 3, **characterized in that** an electric machine (e-machine) or any other suitable additional power unit can be arranged on the shaft (0) after it has been loosened from the housing.

5. Multiple-stage transmission in accordance with one of the preceding claims, **characterized in that** idlers can be used at any suitable point of the transmission.

6. Multiple-stage transmission in accordance with claim 5, **characterized in that** the idlers can be used between the shafts and the housing.

7. Multiple-stage transmission in accordance with one of the preceding claims, **characterized in that** the input and output can be arranged on the same side of the housing.

8. Multiple-stage transmission in accordance with one of the preceding claims, **characterized in that** the input and output can be arranged on opposite sides of the housing.

9. Multiple-stage transmission in accordance with one of the preceding claims, **characterized in that** an axle or transfer differential can be arranged on input or output side of housing.

10. Multiple-stage transmission in accordance with one of the preceding claims, **characterized in that** the input shaft (1) can be disconnected from a drive motor via a clutch element.

11. Multiple-stage transmission in accordance with claim 10, **characterized in that** a hydrodynamic torque converter, a hydraulic clutch, a dry starting clutch, a wet starting clutch, a magnetic powder clutch, or a centrifugal force clutch is provided as a clutch element.

12. Multiple-stage transmission in accordance with one of the preceding claims, **characterized in that** an external starting component can be arranged behind the transmission, especially in accordance with claim 11, with the input shaft (1) being fixed to the crankshaft of the drive motor.

13. Multiple-stage transmission in accordance with one of the preceding claims, **characterized in that** setting off takes place via a shift element of the transmission with the crankshaft of the motor always being linked to the input shaft (1).

14. Multiple-stage transmission in accordance with claim 13, **characterized in that** either brake (04) or brake (03), or the clutch (16) can be used as shift elements.

15. Multiple-stage transmission in accordance with one of the preceding claims, **characterized in that** a torsional vibration damper can be arranged between engine and transmission.

16. Multiple-stage transmission in accordance with one of the preceding claims, **characterized in that** a wear-free brake can be attached to each shaft.

17. Multiple-stage transmission in accordance with claim 16, **characterized in that** a wear-free brake can be attached to the input shaft (1) or the output shaft (2).

18. Multiple-stage transmission in accordance with one of the preceding claims, **characterized in that** a power take-off unit can be attached to every shaft for powering additional units.

19. Multiple-stage transmission in accordance with claim 18, **characterized in that** the power take-off unit can be attached to the input shaft (1) or the output shaft (2).

20. Multiple-stage transmission in accordance with one of the preceding claims, **characterized in that** the shift elements are formed as powershift clutches or brakes.

21. Multiple-stage transmission in accordance with claim 20, **characterized in that** multi-disc clutches, belt brakes and/or cone clutches can be used.

22. Multiple-stage transmission in accordance with one of the preceding claims, **characterized in that** form-locking brakes and/or clutches are provided as shift elements.

23. Multiple-stage transmission in accordance with one of the preceding claims, **characterized in that** an electric machine can be attached to each shaft as a generator and/or as an additional power unit.

## Revendications

1. Boîte de vitesses à plusieurs rapports à train épicycloïdal, en particulier une transmission automatique pour un véhicule automobile, comprenant : un arbre d'entrée (1) et un arbre de sortie (2), lesquels sont disposés dans un carter ; trois trains planétaires à une nervure (P1, P2, P3), sachant que le premier train planétaire à une nervure (P1) définit un rapport de démultiplication en entrée fixe pour le deuxième train planétaire (P2) ; au moins six arbres rotatifs (0, 1, 2, 3, 4, 5, 6) ainsi qu'au moins cinq éléments de commande (00, 03, 04, 13, 16, 45), les freins et/ou des embrayages, dont l'engagement sélectif et jumelé induit différents rapports de démultiplication entre l'arbre d'entrée (1) et l'arbre de sortie (2), permettant de réaliser six marches avant et une marche arrière ; sachant que la nervure du premier train planétaire (P1) peur être lié de façon solidaire en rotation au carter, l'entraînement étant assuré par l'arbre de sortie (P2) qui est relié à la nervure du troisième train planétaire (P3), un arbre (4) est lié en permanence au pignon solaire du deuxième train planétaire (P2), l'arbre (04) peut être accouplé au carter à l'aide d'un frein (04), et en ce qu'un embrayage (16) relie les arbres (1) et (6) de façon amovible, **caractérisée en ce que** l'arbre d'entrée (1) est lié directement au pignon solaire du premier train planétaire (P1 ), **en ce que** l'arbre de sortie (2) est également lié à la couronne du deuxième train planétaire (P2), **en ce que** un arbre (3) est lié en permanence à la nervure du deuxième train planétaire (P2) et à la couronne du troisième train planétaire (P3), en de que **en ce que** un arbre (5) est lié en permanence à la couronne du premier train planétaire (P1), et **en ce que** un arbre (6) est lié en permanence au pignon solaire du troisième train planétaire (P3), sachant que l'arbre (3) peut être accouplé au carter par à l'aide d'un frein (03) ; **en ce qu'**un embrayage (13) relie les arbres (1) et (3) de façon amovible, et **en ce que** un embrayage (45) relie les arbres (4) et (5) de façon amovible.

2. Boîte de vitesses à plusieurs rapports selon la revendication 1, **caractérisée en ce que** le premier train planétaire (P1) est réalisé en tant que train planétaire positif et **en ce que** les trains planétaires (P2) et (P3) sont réalisés en tant que trains planétaires négatifs.

3. Boîte de vitesses à plusieurs rapports selon la revendication 1 ou 2, **caractérisée en ce que** la liaison fixe de la nervure du premier train planétaire (P1) au carter peut être remplacée par une liaison amovible au moyen d'un frein (00).

4. Boîte de vitesses à plusieurs rapports selon la revendication 3, **caractérisée en ce que** sur l'arbre détaché du carter (0) peut être positionnée une machine électrique ou une autre machine motrice supplémentaire et appropriée.

5. Boîte de vitesses à plusieurs rapports selon une des revendications précédentes, **caractérisée en ce que** à chaque endroit approprié de la boîte de vitesses peuvent être montées des roues libres.

6. Boîte de vitesses selon la revendication 5, **caractérisée en ce que** les roues libres peuvent être montées entre les arbres et le carter.

7. Boîte de vitesses selon une des revendications précédentes, **caractérisée en ce que** l'entrée et la sortie peuvent être disposées d'un même côté du carter.

8. Boîte de vitesses à plusieurs rapports selon une des revendications précédentes, **caractérisée en ce que** l'entrée et la sortie peuvent être disposées de deux côtés opposées du carter.

9. Boîte de vitesses à plusieurs rapports selon une des revendications précédentes, **caractérisée en ce que** du côté entrée et du côté sortie du carter peuvent être disposés un différentiel inter-ponts et un différentiel répartiteur de couple.

10. Boîte de vitesses à plusieurs rapports selon une des revendications précédentes, **caractérisée en ce que** l'arbre d'entrée (1) peut être désolidarisé du moteur d'entraînement par un élément d'embrayage.

11. Boîte de vitesses à plusieurs rapports selon la revendication 10, **caractérisée en ce que** en tant qu'élément d'embrayage est prévu un convertisseur de couple hydrodynamique, un embrayage hydraulique, un embrayage à sec, un embrayage de démarrage à bain d'huile, un embrayage à poudre magnétique ou un embrayage centrifuge.

12. Boîte de vitesses à plusieurs rapports selon une des revendications précédentes, **caractérisée en ce que** en aval de la boîte de vitesses peut être disposé un élément de démarrage externe, et cela en particulier selon la revendication 11, sachant que l'arbre d'entrée (1) est lié de façon solidaire au vilebrequin du moteur d'entraînement.

13. Boîte de vitesses à plusieurs rapports selon une des revendications précédentes, **caractérisée en ce que** le démarrage s'effectue au moyen d'un élément de commande de la boîte de vitesses, sachant que le vilebrequin du moteur est lié en permanence à l'arbre d'entrée (1).

14. Boîte de vitesses à plusieurs rapports selon la revendication 13, **caractérisée en ce que** en tant qu'élément de commande peuvent être utilisés le frein (04), le frein (03) ou l'embrayage (16).

15. Boîte de vitesses à plusieurs rapports selon une des revendications précédentes, **caractérisée en ce que** entre le moteur et la boîte de vitesses peut être disposé un amortisseur de vibrations torsionnelles.

16. Boîte de vitesses à plusieurs rapports selon une des revendications précédentes, **caractérisée en ce que** sur chaque arbre peut être disposé un frein sans usure.

17. Boîte de vitesses à plusierurs rapports selon la revendicaiton 16, **caractérisée en ce que** un frein sans usure peut être disposé sur l'arbre d'entrée (1) ou sur l'arbre de sortie (2).

18. Boîte de vitesses à plusieurs rapports selon une des revendications précédentes, **caractérisée en ce que** sur chaque arbre peut être disposée une prise de mouvement pour l'entraînement de groupes auxiliaires.

19. Boîte de vitesses à plusieurs rapports selon la revendication 18, **caractérisée en ce que** la prise de mouvement peut être disposée sur l'arbre d'entrée (1) ou sur l'arbre de sortie (2).

20. Boîte de vitesses à plusieurs rapports selon une des revendications précédentes, **caractérisée en ce que** les éléments de commande sont réalisés en tant qu'embrayages ou freins manoeuvrables sous charge.

21. Boîte de vitesses à plusieurs rapports selon la revendication 20, **caractérisée en ce que** peuvent être utilisés des embrayages à disques, des freins à rubans et/ou des embrayages coniques.

22. Boîte de vitesses à plusieurs rapports selon une des revendications précédentes, **caractérisée en ce que** en tant qu'éléments de commande sont prévus des freins et/ou des embrayages à commande mécanique.

23. Boîte de vitesses à plusieurs rapports selon une des revendications précédentes, **caractérisée en ce que** sur chaque arbre peut être montée une machine électrique en tant que génératrice et/ou machine motrice supplémentaire.
